# EUROPÄISCHE PATENTANMELDUNG

(11) **EP 1 086 641 A1**
(43) Veröffentlichungstag der Anmeldung: **28.03.2001**
(21) Anmeldenummer: 00117189.1
(22) Anmeldetag: 11.08.2000
(51) Int. Cl.: A47J 31/46, A47J 31/54

(54) **Brühgetränkezubereitungsmaschine**

(30) Priorität: 24.09.1999 DE 19945833
(71) Anmelder: Braun GmbH, 61476 Kronberg (DE)
(72) Erfinder: Klawuhn, Manfred, 60437 Fankfurt am Main (DE); Schamberg, Stefan, 61250 Usingen (DE)

(57) **Zusammenfassung**

Eine als Kombination einer Kaffeemaschine mit einer Dampferzeugungseinrichtung, mit der sich z.B. Milch aufschäumen läßt, verwirklichte Brühgetränkezubereitungsmaschine weist erfindungsgemäß eine ein Mehrwegeumschaltventil (4) mit einem einen Dampfabscheider bildenden Druckspeicher (17) kombinierende Baugruppe auf. Das Mehrwegeumschaltventil (4) stellt in einer ersten Schaltstellung "K" einen Wasserströmungsweg von einem als Wasserquelle dienenden Wasservorratsbehälter (1) zu einem Wassererhitzer (14) und vom Wassererhitzer (14) über eine Steigleitung (8) zu einem Kaffeefilterbehälter (2) her. In einer zweiten Schaltstellung "D" wird eine geringe Menge Wasser, die über einen separaten Einfülltrichter (13) in den Druckspeicher (17) eingefüllt wird, mittels des Wassererhitzers (14) erhitzt. Im Dampfabscheider wird Dampf vom Wasser abgeschieden und der erzeugte Dampf wird vom Druckspeicher (17) zu einer Dampfdüse 19 geführt.

## Beschreibung

Die Erfindung betrifft eine Brühgetränkezubereitungsmaschine nach dem Oberbegriff des Anspruchs 1.

Eine derartige Brühgetränkezubereitungsmaschine ist aus der DE 195 45 111 A1 bekannt. Bei der bekannten Brühgetränkezubereitungsmaschine, die als Kombination einer üblichen Kaffeemaschine mit einer Milchaufschäumeinrichtung gestaltet ist, ist der Druckspeicher des Dampfabscheiders an einem Mehrwegeumschaltventil angeschlossen.

Davon ausgehend ist es die Aufgabe der Erfindung, eine verbesserte Brühgetränkezubereitungsmaschine zu schaffen, die sowohl Kaffee oder Tee als auch Milchschaum erzeugen kann und bei der alle Funktionen möglichst einfach und kostengünstig realisiert sind.

Diese Aufgabe wird bei einer Brühgetränkezubereitungsmaschine der eingangs genannten Art erfindungsgemäß durch den kennzeichnenden Teil des Anspruchs 1 gelöst. Durch die Schaffung einer kombinierten Mehrwegeumschaltventil-Druckspeicher-Baugruppe wird die Konstruktion der Brühgetränkezubereitungsmaschine wesentlich vereinfacht. Dies hat vorteilhafte Auswirkungen auf die Herstellung und damit die Kosten der Brühgetränkezubereitungsmaschine.

Die das Mehrwegeumschaltventil mit dem Druckspeicher des Dampfabscheiders kombinierende Baugruppe kann erfindungsgemäß entweder als Schiebeschalt- oder als Drehschaltventil ausgestaltet sein. Der Druckspeicher kann ein Druckbehälter, eine Art Druckrohr oder sonst ein beliebiger Druckraum sein, der den überhitzten Dampf aufnehmen und der gleichzeitig das Ventil bildet.

Durch die Merkmale des Patentanspruchs 2 verbindet das Mehrwegeventil in der Stellung "K" die Wasserquelle, mit dem Wassererhitzer, der wiederum mit einem Filterbehälter verbunden ist. In dieser Ventilstellung kann also mit der Brühgetränkezubereitungsmaschine Kaffee aufgebrüht werden. Bei einer üblichen Brühgetränkezubereitungsmaschine für den häuslichen Bedarf kann die Wasserquelle ein Wasserbehälter oder Wassertank und bei einer professionellen Brühgetränkezubereitungsmaschine der Rohranschluß zum Haushaltswassernetz sein.

Nach dem Merkmal des Patentanspruchs 3 wird bei einer Brühgetränkezubereitungsmaschine dann Dampf erzeugt, wenn das Mehrwegeumschaltventil die Schaltstellung "D" einnimmt und dadurch das von einem Einfülltrichter kommende Wasser dem Durchlauferhitzer zugeführt, dort erhitzt und in den Druckbehälter gelangt, von wo es dann über die Dampfleitung der Dampfdüse zugeführt wird. Der Druckbehälter dient also einerseits zur Aufnahme und Steuerung des Dampfwassergemischs und andererseits zur Trennung des Dampfes vom Wasser.

Durch die Merkmale des Patentanspruchs 4 wird in der Schaltstellung "D" das abgeschiedene Wasser zu dem Wassererhitzer zurückgeleitet, dort wieder erhitzt und wiederum dem Druckbehälter zugeführt. Dieser Vorgang läuft bei eingeschaltetem Gerät solange, bis das gesamte, aus dem Einfülltrichter 13 stammende Wasser an der Dampfdüse als Dampf ausgetreten ist.

Die Merkmale des Patentanspruchs 5 garantieren einen nahezu ungehinderten Durchfluß des Wassers zum Durchlauferhitzer, ohne daß das Mehrwegeumschaltventil strömungshindernd im Wege steht.

Die Merkmale des Patentanspruchs 6 gewährleisten eine einfache Trennung des Dampfes vom Wasser im Druckbehälter, indem dieser als ein Dampfabscheider ausgebildet ist, d. h., das Wasser-Dampf-Gemisch fließt in den Druckbehälter immer oberhalb des maximal möglichen Füllstandes des Wassers ein, so daß der Dampf der Dampfleitung zugeführt werden kann und das Wasser zum Boden des Druckbehälters gelangt. Diese einfache Anordnung führt zu einer besonders wirkungsvollen Trennung von Dampf und Wasser im Mehrwegeumschaltventil.

Die Merkmale des Patentanspruchs 7 ermöglichen es, eine Brühgetränkezubereitungsmaschine bereitzustellen, die sowohl Kaffee aufbrühen kann, wie Dampf zum Aufschäumen von Milch abgibt.

Die Merkmale des Patentanspruchs 8 sorgen dafür, daß unabhängig von der Wasserquelle bzw. dem Wassertank, der zum Zubereiten von Kaffee oder Tee dient, ein weiterer Wassertank als Einfülltrichter im Gerät ausgebildet ist, der ein erheblich kleineres Volumen aufweist und daher auch nicht allzuviel Wasser aufnehmen kann. Diese geringe Wassermenge reicht aber immer noch aus, genügend Dampf auch in größeren Mengen zur Herstellung von Milchschaum bereitzustellen.

Die Merkmale des Patentanspruchs 9 lassen in Abhängigkeit der Ventilstellung auch nur bestimmte Schaltzustände zu, d.h., beispielsweise in der Kaffeestellung wird die volle elektrische Leistung des Durchlauferhitzers eingeschaltet, während beispielsweise in der Stellung "Dampferzeugung" der Durchlauferhitzer nur eine geringere elektrische Leistung abgeben muß. In der Ausstellung sind beispielsweise alle elektrischen Bauteile vom Strom unterbrochen.

Durch die Merkmale des Patentanspruchs 10 ergibt sich ein im Aufbau besonders einfach herzustellendes Mehrwegeumschaltventil, das auch leicht von nur einem Bedienungselement betätigbar ist und somit auf diese Weise bei einer einzigen Betätigung ein oder mehrere Durchläße freigibt und andere dabei versperrt. Ein derartiges Schiebeschaltventil besteht aus wenig Bauteilen, ist leicht herstellbar und kann verhältnismäßig schnell montiert werden.

Selbstverständlich ist auch als Mehrwegeumschaltventil ein Drehschaltventil denkbar (Anspruch 11), ein derartiges Drehschaltventil ist aber in seinem Aufbau aufgrund schwierigerer Kanalführungen geringfügig aufwendiger.

Weitere vorteilhafte Merkmale der erfindungsgemäßen Brühgetränkezubereitungsmaschine werden in der nachstehenden Beschreibung noch deutlicher, die bezugnehmend auf die Zeichnung erfindungsgemäße Ausführungsbeispiele anhand einer Kaffeemaschine mit kombinierter Milchaufschaumeinrichtung beschreibt.
- Fig. 1: zeigt schematisch die wesentlichen Komponenten der erfindungsgemäßen Brühgetränkezubereitungsmaschine, die sie verbindenden Leitungen und die erfindungsgemäß kombinierte Mehrwegeumschaltventil-Druckspeicher-Baugruppe in einer ersten Schaltstellung des Umschaltventils, die der Zubereitung von Kaffee dient.
- Figuren 2A und 2B: zeigen in Form einer perspektivischen Schnittansicht eine kombinierte Mehrwegeumschaltventil-Druckspeicher-Baugruppe in einer ersten Ausführungsform, bei der das Mehrwegeumschaltventil als Schiebeschaltventil gestaltet ist, in zwei verschiedenen Schaltstellungen
- Figuren 3A, 3B und 3C: zeigen in Form einer perspektivischen Schnittansicht eine kombinierte Mehrwegeumschaltventil-Druckspeicher-Baugruppe in einer zweiten Ausführungsform, bei der das Mehrwegeumschaltventil als Drehschaltventil gestaltet ist, in drei unterschiedlichen Schaltstellungen.

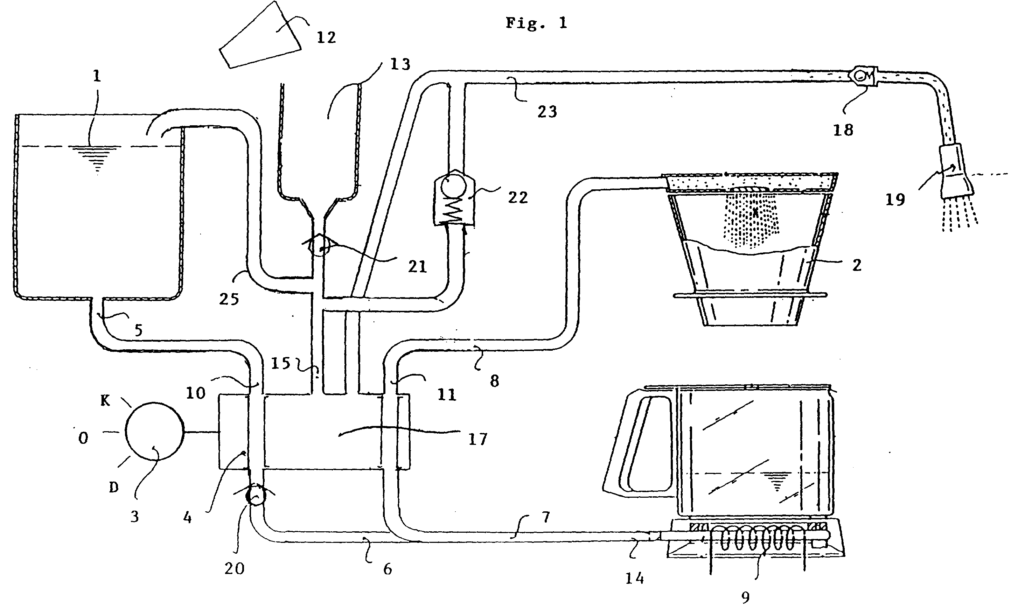

Gemäß Fig. 1 weist eine als Kaffeemaschine in Kombination mit einer Milchaufschäumeinrichtung gestaltete Brühgetränkezubereitungsmaschine als wesentliche Komponenten einen Wasservorratsbehälter 1, einen als Durchlauferhitzer mit einer elektrischen Heizeinrichtung 9 gestalteten Wassererhitzer 14, der unterhalb des Wasserspiegels des Wasservorratsbehälters 1 liegt, einen Filterbehälter 2, einen vom Wasservorratsbehälter 1 separaten Einfülltrichter 13, in den mit einem Meßbecher 12 eine geringe Menge Wasser (z.B. 20-50 ml) zugegeben werden kann, eine Dampfdüse 19 und eine erfindungsgemäß als Kombination eines Mehrwegeumschaltventils 4 mit einem Druckspeicher 17 gestaltete Kombinationsbaugruppe 4, 17 mit einem Einstellknopf 3, welcher in dem in Fig. 1 dargestellten Beispiel in einer ersten der Zubereitung von Kaffee dienenden Schaltstellung "K" steht. Der Einstellknopf 3 ist in drei Schaltstellungen "K", "0" und "D" entsprechend einer ersten bis dritten Stellung des Mehrwegeumschaltventils 4 einstellbar. Der Wasservorratsbehälter 1 kann auch von einer Wasserquelle in Form einer Wasserleitung gebildet sein, die an das Haushaltswassemetz angeschlossen ist.

Der Wasservorratsbehälter 1 ist über eine Auslaßleitung 5 mit einem ersten Eingang 10 der Kombinationsbaugruppe 4, 17 und weiter durch einen Ausgang derselben über eine ein erstes Rückschlagventil 20 enthaltende Wasserzuleitung 6 mit dem Wassererhitzer 14 verbunden. Der Wassererhitzer 14 weist eine Ausgangsleitung 7 auf, die mit der Kombinationsbaugruppe 4, 17 und dann über einen Ausgang 11 der Kombinationsbaugruppe 4, 17 mittels einer Steigleitung 8 mit dem Filterbehälter 2 verbunden ist.

Der separate Einfülltrichter 13 ist über eine ein zweites Rückschlagventil 21 enthaltende Zuleitung 15 mit einem dritten Eingang der Kombinationsbaugruppe 4, 17 verbunden. Eine ein drittes Rückschlagventil 18 enthaltende Dampfleitung 23 führt von einem Dampfausgang der Kombinationsbaugruppe 4, 17 zur Dampfdüse 19.

Zwischen dem zweiten Rückschlagventil 21 und dem dritten Eingang der Zuleitung 15 an der Kombinationsbaugruppe 4 ist eine Überdruckleitung 25 angeschlossen, die zum Wasservorratsbehälter 1 führt, wobei das zweite Rückschlagventil 21 verhindert, daß im Überdruckfall heißes Wasser oder Dampf aus dem Einfülltrichter 13 austritt. An der Stelle, an der die zum Wasservorratsbehälter 1 führende Überdruckleitung 25 angeschlossen ist, ist außerdem die Dampfleitung 23 mit der Zuleitung 15 über ein Sicherheitsventil 22 verbunden, wodurch das Sicherheitsventil 22 einen evtl. in der Dampfleitung 23 entstehenden Überdruck in den Wasservorratsbehälter 1 ableiten kann.

Die das Mehrwegeumschaltventil 4 und den Druckspeicher 17 des Dampfabscheiders enthaltende Kombinationsbaugruppe 4, 17 kann die folgenden Verbindungen herstellen:
1. Leitungsführung für den Kaffeezubereitungsbetrieb, wie er in Fig. 1 dargestellt ist;
2. Leitungsführung für die Dampferzeugurig über den Dampfabscheider und den Druckspeicher 17, und
3. die Umschaltung des Durchlauferhitzers 14.

In der in Fig. 1 dargestellten Funktion zur Kaffeezubereitung sind folgende Bauelemente über das Mehrwegeumschaltventil 4 in dessen Stellung "K" miteinander verbunden.

In den Wasservorratsbehälter 1 wird die benötigte Wassermenge eingefüllt und das Filtergefäß 2, das z.B. als Schwenkfilter ausgeführt ist, wird mit Filtertüte und Kaffeepulver bestückt. Wird der Einstellknopf 3 in die Kaffeestellung "K" gestellt, beginnt der Brühvorgang, indem gleichzeitig die elektrische Heizung 9 über einen (nicht dargestellten) Netzschalter mit Netzspannung versorgt wird. Das Mehrwegeumschaltventil 4 verbindet, wie in Fig. 1 dargestellt, die Auslaßleitung 5 des Wasservorratsbehälters 1 mit der Wasserzuleitung 6 des Wassererhitzers 14 und dessen Ausgangsleitung 7 mit dem Steigrohr 8 zum Kaffeefiltergefäß 2. Im Mehrwegumschaltventil 4 werden bevorzugt die gleichen Leitungsquerschnitte wie in den Verbindungsleitungen 5 und 8 nachgebildet. Dies hat den Vorteil, daß die Restwassermenge auf ein Minimum reduziert wird. Ist der Brühvorgang beendet, schaltet die elektrische Heizung 9 automatisch auf Warmhaltebetrieb um. Um das Gerät abzuschalten, wird der Einstellknopf 3 in seine Nullstellung "0" gebracht.

In der Nullstellung "0" können die Anschlüsse 10 und 11 der Kombinationsbaugruppe 4, 17, d.h. die Auslaßleitung 5 vom Wasservorratsbehälter 1 und die Steigleitung 8 verschlossen sein, und das System ist drucklos.

Im Betrieb als Dampferzeuger hat die Kombinationsbaugruppe 4, 17 folgende Funktionen:

Zunächst wird in den Meßbecher 12 zur Dampferzeugung eine geringe Menge Wasser (z.B. 20-50 ml) gegeben und in den Einfülltrichter 13 gegossen. Das Wasser fließt in Schaltstellung "K" durch das Rückschlagventil 21 und die Zuleitung 15 in den Druckspeicher 17 der Kombinationsbaugruppe 4, 17 und von dort über das erste Rückschlagventil 20 in den Wassererhitzer 14. Wird der Einstellknopf 3 in die Stellung "D" gestellt, beginnt die Dampferzeugung. Gleichzeitig wird die Heizeinrichtung über den Netzschalter mit Netzspannung versorgt. Nun sind die Verbindungen 10, 11 und 15 dampfdicht verschlossen, und der dadurch entstandene Druckspeicher 17 nimmt das aus der Ausgangsleitung 7 der Heizeinrichtung 14 aufsteigende Dampf-Wassergemisch auf und trennt das Wasser vom Dampf. Dabei baut sich ein Überdruck auf, der das Rückschlagventil 18 in der Dampfleitung 23 überwindet, und der Dampf strömt durch die Dampfdüse 19 aus.

Das im Druckspeicher 17 der Kombinationsbaugruppe 4, 17 abgetrennte Wasser wird über das erste Rückschlagventil 20 und die Wasserzuleitung 6 wieder dem Wassererhitzer 14 geführt und erneut verdampft. Dieser Kreislauf wird solange fortgesetzt, bis der Aufschäumvorgang beendet oder alles Wasser verdampft ist.

Um die in Fig. 1 schematisch dargestellte Brühgetränkezubereitungsmaschine nach der Dampferzeugung abzuschalten, wird der Einstellknopf 3 zurück in die Nullstellung "0" gestellt. Hierbei wird der im Druckspeicher 17 der Kombinationsbaugruppe 4, 17 vorhandene Überdruck durch die Zuleitung 15 in den Wasservorratsbehälter 1 zurückgeleitet. Das in der Leitung 15 liegende zweite Rückschlagventil 21 verhindert, wie erwähnt, daß dabei Dampf aus dem Einfülltrichter 13 austritt. Das Sicherheitsventil 22 liegt in einer Bypassleitung, die die Dampfleitung 23 mit der Zuleitung 15 verbindet. Das Sicherheitsventil 22 leitet einen gegebenenfalls in der Dampfleitung 23 auftretenden Überdruck in den Wasservorratsbehälter 1 ab.

Durch die Kombination des Mehrwegumschaltventils 4 mit dem Druckspeicher 17 ist es möglich, alle oben beschriebenen Funktionen in einem Bauteil zu vereinen.

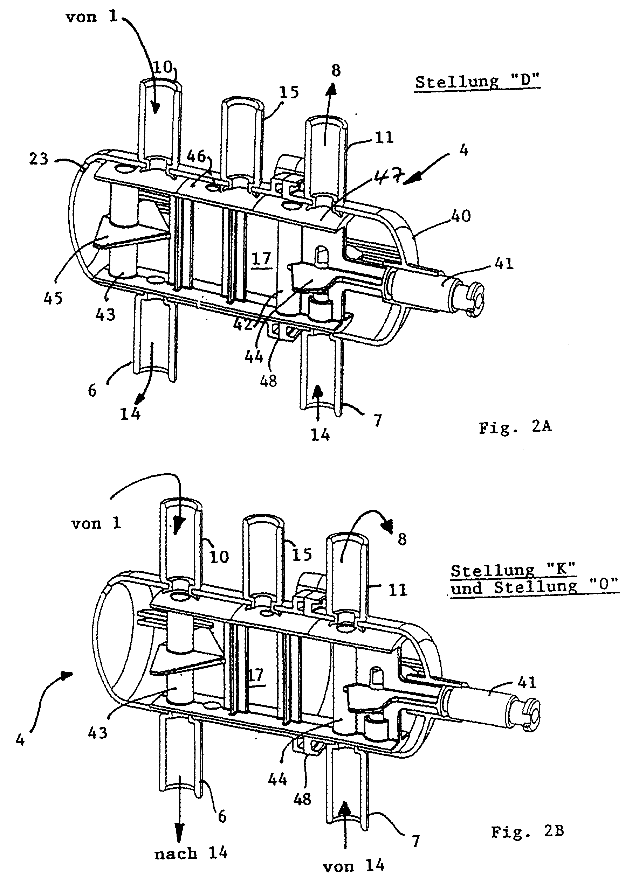

Nachstehend wird bezugnehmend auf die Figuren 1, 2A, 2B ein erstes Ausführungsbeispiel der Kombinationsbaugruppe 4 beschrieben.

Figuren 2A und 2B stellen in Form perspektivischer Schnittansichten ein erstes, als Schiebeschalter realisiertes Ausführungsbeispiel einer kombinierten MehrwegeumschaltventilDruckspeicher-Baugruppe 4, 17 dar und zwar die Fig. 2A in der Dampferzeugungsstellung "D" und Fig. 2B in der der Fig. 1 entsprechenden Stellung "K" bzw. in der Stellung "0". Es wird noch darauf hingewiesen, daß die erste und zweite Stellung "K" und "0" bei diesem Ausfuhrungsbeispiel zusammenfallen.

Die in den Figuren 2A und 2B gezeigte Kombinationsbaugruppe 4, 17 besteht aus einem einen Druckspeicher 17 bildenden Gehäuse 40 und einem darin schiebebeweglichen Schieber 41, der einstückig mit einer Schiebewelle verbunden ist. Der Schieber 41 weist durchgehende vertikale Heiß- und Kaltwasserkanäle 42 und 43 auf, die sich wahlweise in eine der in den Figuren 2A und 2B gezeigten Stellungen "D" und "K" bzw. "0" schieben lassen. Der Schieber 41 weist außerdem obere und untere Dichtungsflächen 46 und 47 auf, durch die mit den Kanälen 42 und 43 jeweils fluchtende obere und untere Öffnungen gehen. In den entsprechenden Öffnungen des Gehäuses 40 des Druckspeichers 17 sind fünf Rohrstutzen angebracht, die im Inneren des Gehäuses ringförmige Dichtungslippen aufweisen, die an den Dichtungsflächen 46 und 47 dicht anliegen. Die oberen Rohrstutzen entsprechen jeweils den Zu- und Ableitungen 10, 15 und 11 und die unteren Rohrstutzen jeweils den Ab- und Zuleitungen 6 und 7 der Kombinationsbaugruppe 4, 17. Ferner weist dieselbe eine mit der Dampfleitung 23 korrespondierende Öffnung auf.

Der Schieber 41 hat ferner horizontale Führungsflächen 44 und 45, die beidseitig in entsprechenden Führungsschienen an der Innenwand des Gehäuses 40 verschiebbar geführt sind, so daß der Schieber 41 nur eine Schiebebewegung ausführen und nicht im Gehäuse 40 verdreht werden kann.

In der in Fig. 2A gezeigten Stellung "D" befindet sich der Schieber 41 in einer Stellung, in der die Dichtungsfläche 46 mit den inneren Dichtungslippen der Rohrstutzen 10, 15 und 11 die ihnen entsprechenden Öffnungen abdichtet, während der mit der Ausgangsleitung 7 des Wassererhitzers 14 kommunizierende Rohrstutzen Zutritt zum Inneren des Druckspeichers 17, d.h. zum Dampfabscheider hat, und die Wasserzuleitung 6 zum Wassererhitzer 14 steht ebenfalls in Verbindung mit dem Inneren des Druckspeichers 17, d.h. mit dem Dampfabscheider. Immer geöffnet ist die zu der Dampfieitung 23 fuhrende Öffnung, so daß der im Dampfabscheider, d.h. im Inneren des Druckspeichers 17 abgeschiedene Dampf in die Dampfleitung 23 aufsteigen kann.

Dagegen steht der Schieber 41 in der in Fig. 2B gezeigten Stellung "K", die wie gesagt mit der Stellung "0" zusammenfällt, derart, daß die vertikalen Durchlaßkanäle 42 und 43 mit den Stutzen 10 und 11 fluchten, so daß das vom Wasservorratsbehälter 1 über die Leitung 5 und den Rohrstutzen 10 einströmende Wasser direkt in die Wasserzuleitung 6 und das vom Wassererhitzer 14 erhitzte Wasser durch den Stutzen 7 direkt in die Steigleitung 8 durch den Rohrstutzen 11 strömen kann. Der Innenraum des Druckspeichers 17, d.h. der Dampfabscheider steht über die obere mittlere Öffnung mit der Zuleitung 15 vom Einfülltrichter 13 in Verbindung, so daß das vor der Dampferzeugung dort eingefüllte Wasser ins Innere des Druckspeichers 17, d.h. in den Dampfabscheider und, wie bereits beschrieben, nach Umschalten in die in Fig. 2A gezeigte Stellung "D" in den Wassererhitzer 14 durch die Leitung 6 fließen kann.

Vorteilhafterweise wird das Gehäuse 40 der in den Figuren 2A und 2B gezeigten Kombinationsbaugruppe 4, 17 in zwei Teilen hergestellt und an jeweiligen äußeren Ringflanschen 48 dicht zusammengefügt, mittels Bajonettverschluß verschraubt oder sonst wie zusammengesetzt. Auf diese Weise läßt sich, abgesehen von den Rohrstutzen 6, 7, 10, 11 und 15 und den nicht gezeigten Dichtungen die gesamte Kombinationsbaugruppe 4, 17 aus nur drei Kunststoff-Spritzgußteilen kostengünstig herstellen, und zwar aus den beiden Gehäuseteilen 40 und dem Schieber 41.

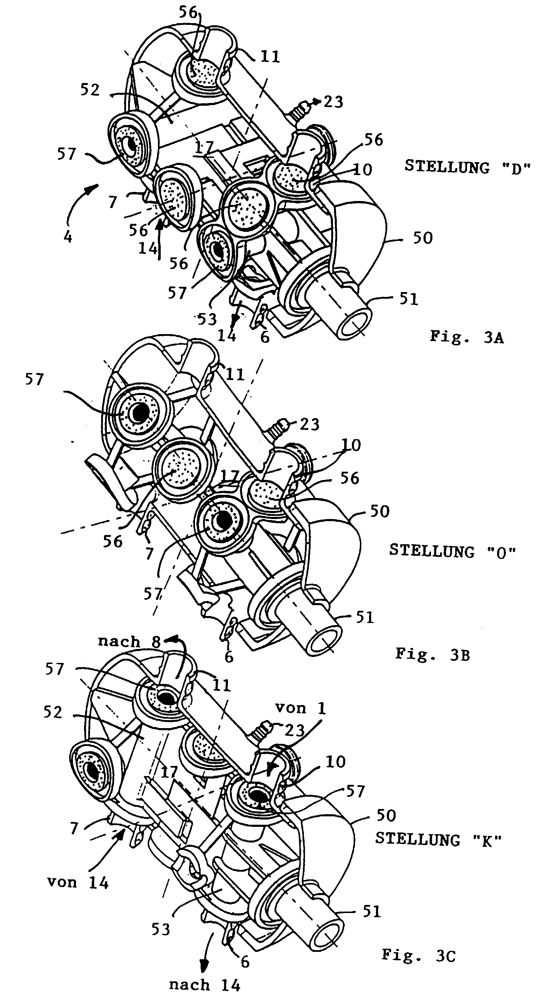

Bezugnehmend auf die perspektivische Schnittansichten darstellenden Figuren 3A, 3B und 3C wird nun eine zweite Ausführungsform einer kombinierten Mehrwegeumschaltventil-Druckspeicher-Baugruppe 4, 17 beschrieben, bei der das Mehrwegeumschaltventil 4 als Drehschaltventil gestaltet ist und zwar für die drei unterschiedlichen Schaltstellungen "D", "0" und "K".

Während das bewegliche Teil bei der in den Figuren 2A und 2B gezeigten ersten Ausführungsform als Schieber gestaltet ist, ist es bei der in den Figuren 3A-3C gezeigten Ausführungsform als Drehteil 51 gestaltet, welches in einer Drehwelle endet, die das Gehäuse 50 einseitig durchdringt. In bestimmten, der ersten bis dritten Stellung "K", "0" und "D" entsprechenden Winkelstellungen sind Dichtungsscheiben 56 vorgesehen. Dort, wo ein Flüssigkeits- bzw. ein Dampfdurchlaß durch die jeweiligen, am Gehäuse 50 angebrachten Rohrstutzen 10, 11, 23, 7, 8 erforderlich ist, sind Dichtungsringe 57 vorgesehen. Die Dichtungsscheiben 56 schließen dabei die Stutzen im Inneren des Gehäuses 50 dicht ab und die Dichtungsringe 57 dichten die Strömungskanäle 52 und 53 gegenüber dem Gehäuseinneren, d.h. dem Dampfabscheider ab.

Im Einzelnen steht das Drehteil 51 in der in Fig. 3A gezeigten Stellung "D", die zur Dampferzeugung für den Milchaufschäumvorgang dient, derart, daß die nach oben ragenden Rohrstutzen 10 und 11 dicht verschlossen sind, und daß die zum Wassererhitzer 14 führenden bzw. vom Wassererhitzer 14 kommenden Leitungen an den entsprechenden Rohrstutzen 7 und 8 an der Unterseite geöffnet sind. Des Weiteren ist ein Stutzen, an dem die Dampfleitung 23 angeschlossen ist, zum Inneren des Druckspeichers 17, d.h. zum Dampfabscheider hin geöffnet. Somit entspricht die in Fig. 3A gezeigte Drehstellung der Kombinationsbaugruppe 4 der in Fig. 2A dargestellten Schiebestellung "D".

In der in Fig. 3B gezeigten Stellung "0" ist das System drucklos und lediglich der Stutzen 10, an dem die vom Wasservorratsbehälter 1 kommende Auslaßleitung 5 angeschlossen ist, ist verschlossen.

In der in Fig. 3C dargestellten Stellung "K", die zur Kaffeezubereitung dient, stellen die nun vertikal stehenden Strömungskanäle 52 und 53, die aufgrund der Dichtungsringe 57 jeweils mit den mit ihnen fluchtenden Rohrflanschen 7, 11 und 6, 10 verbunden sind, die bereits zuvor erläuterte Verbindung jeweils zwischen dem Wasservorratsbehälter 1 und dem Wassererhitzer 14 sowie vom Wassererhitzer 14 zur Steigleitung 8 her. Durch die Dichtungsringe 57 kann kein Wasser ins Innere des Gehäuses 50, d.h. in den Druckspeicher 17 gelangen.

Obwohl die in den Figuren 3A-3C dargestellte zweite Ausführungsform der Kombinationsbaugruppe 4, 17 konstruktiv und fertigungstechnisch etwas aufwendiger erscheint als die in den Figuren 2A und 2B gezeigte Ausführungsform, vereinigt sie dennoch die vorteilhaften Merkmale, die durch die Kombination des Mehrwegeumschaltventils 4 mit dem den Dampfabscheider bildenden Druckspeicher 17 erreicht werden.

Eine als Kombination einer Kaffeemaschine mit einer Dampferzeugungseinrichtung, mit der sich z. B. Milch aufschäumen läßt, verwirklichte Brühgetränkezubereitungsmaschine weist erfindungsgemäß eine ein Mehrwegeumschaltventil 4 mit einem einen Dampfabscheider bildenden Druckspeicher 17 kombinierende Baugruppe auf, und das Mehrwegeumschaltventil 4 stellt in einer ersten Schaltstellung "K" einen Wasserströmungsweg 5, 6 von einem Wasservorratsbehälter 1 zu einem Wassererhitzer 14 und vom Wassererhitzer 14 über eine Steigleitung 7, 8 zu einem Kaffeefilterbehälter 2 her, während gleichzeitig Netzspannung an eine den Wassererhitzer 14 erhitzende Heizeinnchtung 9 angelegt wird. In einer zweiten Schaltstellung "D" wird eine geringe Menge Wasser, die über einen separaten Einfülltrichter 13 in den Druck-behälter (17) eingefüllt wird, mittels des dann mit dem im Inneren des Druckspeichers 17 befindlichen Dampfabscheider verbundenen Wassererhitzers 14 erhitzt und im Dampfabscheider Dampf vom Wasser abgeschieden, und der erzeugte Dampf kann vom Druckspeicher 17 über eine zu einer Dampfdüse 19 führende Dampfleitung 23 zugeleitet werden. Die das Mehrwegeumschaltventil 4 mit dem Druckspeicher und dem Dampfabscheider kombinierende Baugruppe läßt sich leicht und kostengünstig als Kunststoffspritzgußteil herstellen.

## Patentansprüche

1. Brühgetränkezubereitungsmaschine mit einer Wasserquelle (1) und einem Wassererhitzer (14), die miteinander verbunden sind, sowie mit einem Mehrwegeumschaltventil (4), das an die Wasserquelle (14) angeschlossen ist, und mit einem Druckspeicher (17), der mit dem Mehrwegeumschaltventil (4) gekoppelt ist,
**dadurch gekennzeichnet,**
daß das Mehrwegeumschaltventil (4) und der Druckspeicher (17) eine Kombinationsbaugruppe (4, 17) bilden.

2. Brühgetränkezubereitungsmaschine nach Anspruch 1,
**dadurch gekennzeichnet,**
daß das Mehrwegeumschaltventil (4) in einer Schaltstellung ("K") die Wasserquelle (1) mit dem Wassererhitzer (14) und diesen mit einem Filterbehälter (2) verbindet.

3. Brühgetränkezubereitungsmaschine nach einem der Ansprüche 1 oder 2,
**dadurch gekennzeichnet,**
daß der Druckspeicher (17) in einer Schaltstellung ("D") ein von dem Wassererhitzer (14) kommendes Dampf-Wasser-Gemisch aufnimmt und das Wasser vom Dampf trennt, und daß das Mehrwegeumschaltventil (4) in der Schaltstellung ("D") den Dampf zu einer Dampfdüse (19) führt.

4. Brühgetränkezubereitungsmaschine nach Anspruch 3,
**dadurch gekennzeichnet,**
daß das Mehrwegeumschaltventil (4) in der Schaltstellung ("D") das Wasser wieder zu dem Wassererhitzer (14) führt.

5. Brühgetränkezubereitungsmaschine nach einem der vorangehenden Ansprüche,
**dadurch gekennzeichnet,**
daß in dem Mehrwegeumschaltventil (4) etwa die gleichen Leitungsquerschnitte vorhanden sind wie in den Leitungen von und zu der Wasserquelle (1).

6. Brühgetränkezubereitungsmaschine nach einem der vorangehenden Ansprüche,
**dadurch gekennzeichnet,**
daß der Druckspeicher ein Druckspeicher (17) der Kombinationsbaugruppe (4, 17) ist,der mit einem Dampfabscheider versehen ist.

7. Brühgetränkezubereitungsmaschine nach einem der vorangehenden Ansprüche,
**dadurch gekennzeichnet,**
daß mit dem Wassererhitzer (14) Wasser zur Herstellung von Brühgetränken erhitzbar sowie Dampf z.B. zum Aufschäumen von Milch erzeugbar ist.

8. Brühgetränkezubereitungsmaschine nach einem der vorangehenden Ansprüche,
**dadurch gekennzeichnet,**
daß ein Einfülltrichter (13) vorgesehen ist, der mit dem Druckspeicher (17) verbindbar ist.

9. Brühgetränkezubereitungsmaschine nach einem der vorangehenden Ansprüche,
**dadurch gekennzeichnet,**
daß die Schaltstellungen ("K", "0", "D") des Mehrwegeumschaltventils (4) mit entsprechenden Schaltstellungen eines Netzspannungsschalters für den Wassererhitzer (14) gekoppelt sind.

10. Brühgetränkezubereitungsmaschine nach einem der Ansprüche 1 bis 9,
**dadurch gekennzeichnet,**
daß das Mehrwegeumschaltventil (4) als Schiebeschaltventil ausgestaltet ist.

11. Brühgetränkezubereitungsmaschine nach einem der Ansprüche 1 bis 9,
**dadurch gekennzeichnet,**
daß das Mehrwegeumschaltventil (4) als Drehschaltventil ausgestaltet ist.
